# FASCICULE DE BREVET EUROPEEN

(11) **EP 2 451 697 B1**
(45) Date de publication et mention de la délivrance du brevet: **25.03.2015**
(21) Numéro de dépôt: 10734202.4
(22) Date de dépôt: 01.06.2010
(51) Int. Cl.: B62D 65/06

(54) **DISPOSITIF ET PROCEDE DE REGLAGE DE LA POSITION ENTRE UNE AILE AVANT ET UNE PORTE AVANT D'UN VEHICULE**
VORRICHTUNG UND VERFAHREN ZUR EINSTELLUNG DER POSITION ZWISCHEN EINEM FRONTFLÜGEL UND EINER VORDERTÜR EINES FAHRZEUGES
DEVICE AND METHOD FOR ADJUSTING THE POSITION BETWEEN A FRONT WING AND A FRONT DOOR OF A VEHICLE

(30) Priorité: 09.07.2009 FR 0954753
(43) Date de publication de la demande: 16.05.2012
(73) Titulaire: PEUGEOT CITROËN AUTOMOBILES SA, 78140 Velizy-Villacoublay (FR)
(72) Inventeur: GARCIA REYNOSO, José, F-25200 Montbeliard (FR)
(74) Mandataire: Fosse, Danièle
(86) Numéro de dépôt international: PCT/FR2010/051061
(87) Numéro de publication internationale: WO 2011/004086

(56) Documents cités:
- US-A1- 2005 177 991
- US-B1- 6 708 393

## Description

La présente invention se rapporte à un dispositif de réglage de la position entre deux éléments de carrosserie d'un véhicule constitués respectivement d'une aile avant et d'une porte avant, et à un procédé de réglage associé.

Le document US 2005/177991 décrit un dispositif selon le préambule de la revendication 1.

De façon classique sur un véhicule automobile, l'aile avant présente un rebord arrière qui s'étend en regard du rebord avant de la porte avant, de sorte que ces deux rebords sont sensiblement jointifs. Pour des raisons évidentes d'esthétisme, l'aile avant et la porte avant doivent présenter un entrefer de largeur prédéfinie et sensiblement constante et l'aile avant et la porte avant doivent être sensiblement coplanaires au niveau de ces rebords. Autrement dit, il est important que ces deux rebords soient parfaitement alignés selon une direction sensiblement verticale, et qu'ils offrent une surface continue jointive sans décalage dans la direction transversale Y du véhicule.

Sur les lignes de montage des véhicules automobiles se présentent une certaine difficulté dans le réglage de position de l'aile avant par rapport à la porte avant ; ladite porte avant étant généralement monté sur le châssis du véhicule avant l'aile avant. La difficulté porte essentiellement sur le réglage de l'entrefer et de la coplanarité entre la porte avant et l'aile avant.

Pour le montage de l'aile avant sur le châssis, il est connu d'employer des outils suspendus qui sont montés sur des rails disposés en hauteur au-dessus des lignes de montage et qui supportent les ailes avant pour régler leur accostage sur le châssis du véhicule et régler leur positionnement par rapport à la porte avant. Néanmoins, de tels outils présentent de nombreux inconvénients comme par exemple leur encombrement, leur difficulté de manipulation, les risques de collision entre l'outil et le véhicule.

La présente invention a pour but résoudre en tout ou partie ces inconvénients en proposant un dispositif qui permettent un réglage aisé, rapide et amélioré de l'aile avant par rapport à la porte avant.

A cet effet, elle propose dispositif de réglage de la position entre deux éléments de carrosserie d'un véhicule constitués respectivement d'une aile avant et d'une porte avant, ledit dispositif étant remarquable en ce qu'il comporte un châssis et les moyens suivants :
- au moins un moyen supérieur de liaison entre des parties supérieures respectives des deux éléments de carrosserie, ledit moyen supérieur de liaison étant monté sur une partie supérieure dudit châssis ;
- au moins un moyen inférieur de liaison entre des parties inférieures respectives des deux éléments de carrosserie, ledit moyen inférieur de liaison étant monté sur une partie inférieure dudit châssis ;
- au moins un pion monté à coulissement sur ledit châssis et destiné à être inséré dans l'entrefer séparant les deux éléments de carrosserie ; et
- des moyens de maintien du châssis sur les éléments de carrosserie respectifs, lesdits moyens de maintien, notamment réalisés sous la forme d'aimants, étant fixés sur ledit châssis.

Ainsi, il n'est pas nécessaire de suspendre le dispositif conforme à l'invention, ce dernier supportant ces propres moyens de maintien à la fois sur l'aile avant et sur la porte avant du véhicule.

Le moyen supérieur de liaison est conformé pour relier entre elles les parties supérieures respectives des deux éléments de carrosserie, et est ainsi conformé pour permettre le réglage en position de ces deux parties supérieures.

De même, le moyen inférieur de liaison est conformé pour relier entre elles les parties inférieures respectives des deux éléments de carrosserie, et est ainsi conformé pour permettre le réglage en position de ces deux parties inférieures.

Le pion coulissant permet un réglage de l'entrefer entre les parties supérieures et inférieures des respectivement aile avant et porte avant.

Dans une réalisation particulière, le moyen supérieur de liaison comporte :
- un organe de mise en tension, notamment du type ressort, ledit organe de mise en tension présentant une première extrémité et une deuxième extrémité ;
- un premier organe d'ancrage solidaire du châssis et destiné à être ancré sur l'un des deux éléments de carrosserie, appelé premier élément de carrosserie, ledit organe de mise en tension étant monté à sa première extrémité sur ledit premier organe d'ancrage ; et
- un second organe d'ancrage monté sur la deuxième extrémité de l'organe de mise en tension, ledit second organe d'ancrage étant destiné à être ancré sur l'autre des deux éléments de carrosserie, appelé deuxième élément de carrosserie, une fois que ledit premier organe d'ancrage est ancré sur le premier élément de carrosserie.

Selon une caractéristique, le premier organe d'ancrage est réalisé sous la forme d'une pièce en saillie du châssis destinée à être ancrée dans un logement ménagé dans le premier élément de carrosserie.

Selon une autre caractéristique, le second organe d'ancrage comprend :
- une embase dans laquelle est ménagée une encoche destinée à coopérer avec le premier élément de carrosserie ; et
- une protubérance saillante de ladite embase et présentant une rainure destinée à coopérer avec le rebord d'un logement ménagé dans le second élément de carrosserie.

Dans un mode de réalisation particulier, le moyen inférieur de liaison comporte :
- une tige montée à coulissement et à rotation dans un support de tige solidaire du châssis, ladite tige présentant une première extrémité en forme générale de « T » en étant munie de deux branches latérales ;
- un moyen de mise en mouvement de ladite tige adapté pour déplacer la tige en translation selon un premier sens afin que sa première extrémité traverse l'entrefer séparant les deux éléments de carrosserie, et pour déplacer la tige en rotation afin de disposer les deux branches latérales en regard des deux éléments de carrosserie respectifs ; et
- un moyen de rappel destiné à imposer un déplacement de la tige en translation selon un deuxième sens opposé au premier sens de sorte que les deux branches latérales viennent en butée contre les deux éléments de carrosserie respectifs pour régler le positionnement relatif des deux éléments de carrosserie.

Selon une caractéristique, les moyens de maintien comportent au moins deux organes de maintien du châssis sur les parties inférieures respectives des éléments de carrosserie, lesdits organes de maintien, notamment réalisés sous la forme d'aimants, étant fixés sur la partie inférieure dudit châssis de part et d'autre de la première extrémité de la tige.

Selon une autre caractéristique, le moyen inférieur de liaison comporte en outre :
- un organe formant crochet conçu pour verrouiller ledit châssis sur l'un des éléments de carrosserie, ledit organe formant crochet étant monté pivotant sur le châssis entre une position de déverrouillage et une position de verrouillage ; et
- un organe de rappel fixé d'une part sur l'organe formant crochet et d'autre part sur le châssis pour rappeler l'organe formant crochet en position de verrouillage.

La présente invention concerne également les caractéristiques ci après :
- le pion est fixé sur un chariot monté à coulissement sur le châssis, ledit chariot supportant un moyen de préhension adapté pour permettre le déplacement dudit chariot ; et/ou
- les moyens de maintien comportent au moins deux organes de maintien du châssis sur les parties supérieures respectives des éléments de carrosserie, lesdits organes de maintien étant fixés sur la partie supérieure dudit châssis et notamment réalisés sous la forme d'aimants.

L'invention concerne également un procédé de réglage de la position entre deux éléments de carrosserie d'un véhicule constitués respectivement d'une aile avant et d'une porte avant, ledit procédé consistant à utiliser le dispositif de réglage conforme à l'invention.

D'autres caractéristiques et avantages de la présente invention apparaîtront à la lecture de la description détaillée ci-après, d'un exemple de mise en oeuvre non limitatif, faite en référence aux figures annexées dans lesquelles :
- les figures 1 et 2 sont des vues respectivement de côté et en perspective d'un dispositif de réglage conforme à l'invention en situation sur une aile avant et une porte avant de véhicule automobile ;
- la figure 3 est une vue en perspective arrière du dispositif de réglage visible aux figures 1 et 2 ;
- les figures 4 à 6 sont des vues en perspectives avant détaillées des zones respectivement IV à VI de la figure 3 ;
- les figures 7 à 9 sont des vues en perspective de la partie supérieure du dispositif de réglage des figures 1 et 2 en situation sur une aile avant et une porte avant de véhicule automobile ;
- la figure 10 est une vue de dessus du dispositif de réglage des figures 1 et 2 en situation sur une aile avant et une porte avant de véhicule automobile ;
- les figures 11 et 12 sont des vues en perspective de la partie inférieure du dispositif de réglage des figures 1 et 2 en situation sur une aile avant et une porte avant de véhicule automobile, où la tige en forme de « T » du moyen inférieur de liaison occupe respectivement une position d'engagement dans l'entrefer séparant l'aile avant et la porte avant et une position de verrouillage sur l'aile avant et la porte avant.

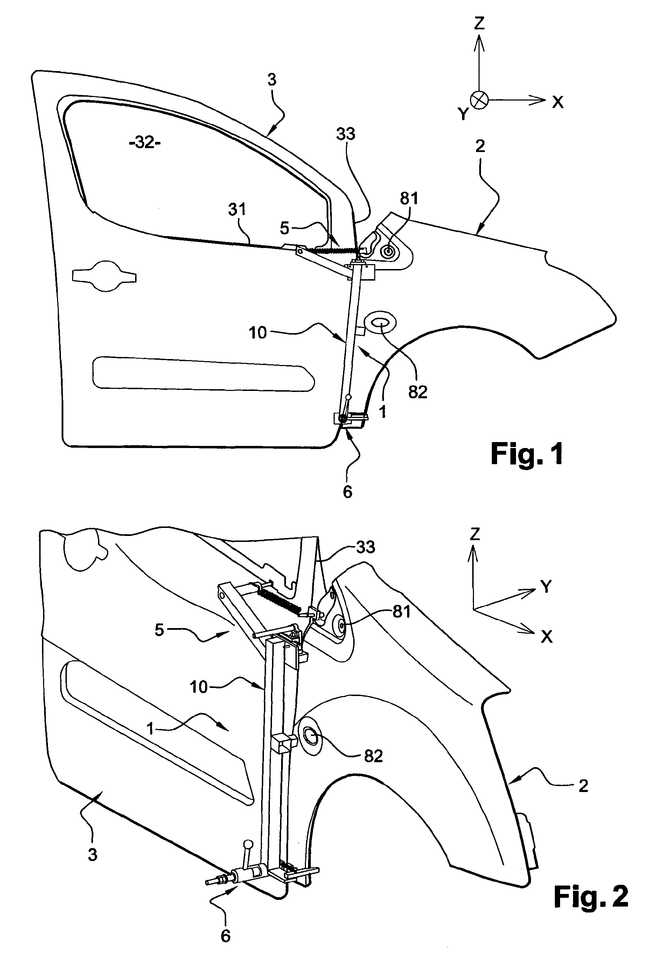

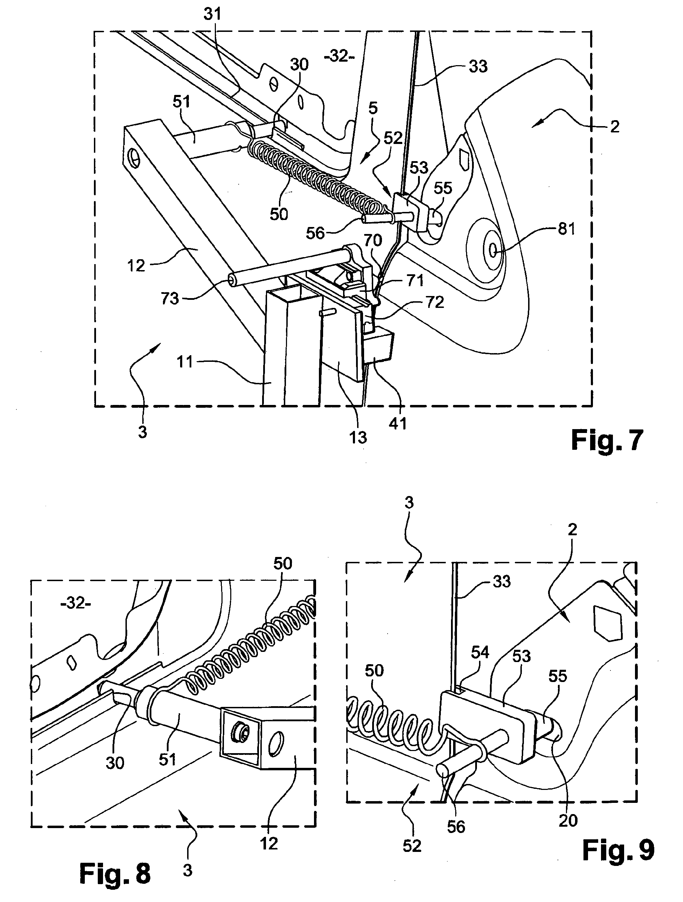

L'invention concerne un dispositif de réglage 1 de la position entre une aile avant 2 et une porte avant 3 d'un véhicule automobile, cette aile avant 2 et cette porte avant 3 constituant des éléments de carrosserie du véhicule. La description de ce dispositif 1 est faite en référence aux figures 1 à 12.

Pour la suite de la description, il est entendu par « partie supérieure » une partie située en hauteur ou en élévation par rapport à une « partie inférieure » qui est située sensiblement au niveau du soubassement du véhicule. Il est entendu par « partie centrale » une partie intermédiaire ou médiane située entre les parties inférieure et supérieure.

Pour la suite de la description, il est entendu par « direction longitudinale du véhicule » ou « axe longitudinal du véhicule » la direction ou l'axe X s'étendant de l'arrière à l'avant du véhicule relativement à l'avancement en marche avant du véhicule, et par « direction transversale au véhicule » ou « axe transversal au véhicule » la direction ou l'axe Y s'étendant de gauche à droite de façon perpendiculaire à la direction longitudinale du véhicule.

Pour la suite de la description du dispositif de réglage 1 conforme à l'invention, il est entendu par « face avant » la face destinée à venir en regard du véhicule et plus particulièrement de ses éléments de carrosserie 2, 3, et il est entendu par « face arrière » la face opposée à la face avant et donc opposée au véhicule quand ledit dispositif 1 est mis en place sur le véhicule en question.

Le dispositif 1 conforme à l'invention comporte un châssis 10 en acier comprenant :
- une poutre 11 réalisée sous la forme d'un profilé et présentant une extrémité supérieure et une extrémité inférieure ;
- un bras supérieur 12 transversal fixé à l'extrémité supérieure de la poutre 11 et incliné par rapport à la poutre 11, ledit bras étant réalisé sous la forme d'un profilé et s'étendant en direction de la porte avant 3 une fois le dispositif 1 en situation ;
- une plaque supérieure 13 plane en acier fixée sur l'extrémité supérieure de la poutre 11 côté face avant ;
- un bras inférieur 14 transversal fixé à l'extrémité supérieure de la poutre 11 et incliné par rapport à la poutre 11, ledit bras étant réalisé sous la forme d'une plaque plane et s'étendant en direction de l'aile avant 2 une fois le dispositif 1 en situation ; et
- une plaque inférieure 15 plane en acier fixée sur l'extrémité inférieure de la poutre 11 côté face avant, ladite plaque inférieure 15 étant pourvue d'un orifice traversant venant dans le prolongement d'un orifice traversant l'extrémité inférieure de la poutre 11.

Le dispositif 1 comprend des moyens de maintien du châssis 10 sur l'aile avant 2 et la porte avant 3, lesdits moyens de maintien étant fixés sur ledit châssis 10 côté face avant. Les moyens de maintien sont réalisés sous la forme d'aimants noyés dans des enveloppes en plastique pour éviter que les particules métalliques ne rayent les éléments de carrosserie. Les enveloppes en plastique présentent une épaisseur de l'ordre du millimètre au niveau des surfaces de contact avec les éléments de carrosserie.

De façon plus spécifique, les moyens de maintien comprennent :
- deux aimants supérieurs 41, 42 fixés sur la plaque supérieure 13 du châssis 10 et disposés côte à côte pour que l'aimant supérieur 41 coopère avec l'aile avant 2 et l'aimant supérieur 42 coopère avec la porte avant 3 afin que, une fois le dispositif 1 en situation, les deux aimants supérieurs 41, 42 soient disposés de part et d'autre de l'entrefer séparant les parties supérieures respectives de la porte avant 3 et l'aile avant 2 ;
- un aimant central 43 fixé dans une zone médiane de la poutre 11, entre ses extrémités inférieure et supérieure, ledit aimant central 43 étant fixé sur une pièce saillante 16 disposée sur le côté de la poutre 11 pour que ledit aimant central 43 coopère avec l'aile avant 2 afin que, une fois le dispositif 1 en situation, l'aimant central 43 soit en appui contre ladite aile avant 3 à côté de l'entrefer séparant les parties centrales respectives de la porte avant 3 et l'aile avant 2 ; et
- deux aimants inférieurs 44, 45 fixés sur la plaque inférieure 15 du châssis 10 et disposés côte à côte, de part et d'autre de l'orifice traversant ladite plaque 15, pour que l'aimant inférieur 44 coopère avec l'aile avant 2 et l'aimant inférieur 45 coopère avec la porte avant 3 afin que, une fois le dispositif 1 en situation, les deux aimants inférieurs 44, 45 soient disposés de part et d'autre de l'entrefer séparant les parties inférieures respectives de la porte avant 3 et l'aile avant 2.

L'aimant central 43 permet de garantir l'affleurement de l'aile avant 2 par rapport à la porte avant 3 en zone centrale.

Le dispositif 1 comprend un moyen supérieur de liaison 5 entre les parties supérieures respectives de l'aile avant 2 et la porte avant 3, ledit moyen supérieur de liaison 5 étant conçu pour régler la position de la partie supérieure de l'aile avant 2 par rapport à la partie supérieure de la porte avant 3, et plus particulièrement pour régler l'entrefer entre l'aile avant 2 et la porte avant 3 et pour assurer que ces deux éléments de carrosserie 2, 3 offrent en partie supérieure une surface continue jointive sans décalage dans la direction transversale Y du véhicule.

Le moyen supérieur de liaison 5 comporte :
- un ressort 50 hélicoïdal, formant organe de mise en tension, qui présente une première extrémité et une deuxième extrémité ;
- un premier organe d'ancrage réalisé sous la forme d'une pièce 51 longiligne faisant saillie de l'extrémité libre du bras supérieur 12 du châssis 10 côté face avant, le ressort 50 étant monté à sa première extrémité sur cette pièce en saillie 51 ; et
- un second organe d'ancrage 52 monté sur la deuxième extrémité du ressort 50, ledit second organe d'ancrage 52 étant destiné à être ancré sur l'aile avant 3 une fois que la pièce en saillie 51 est engagé dans l'encoche 30 de la porte avant 3.

La pièce en saillie 51 forme un doigt de section cylindrique qui est destiné à être ancré dans une encoche 30 ménagée sur la porte avant 3, et plus particulièrement sur le rebord inférieur 31 de la paroi délimitant l'ouverture de fenêtre 32.

Le second organe d'ancrage 52 comprend :
- une embase 53 dans laquelle est ménagée une encoche 54 destinée à coopérer avec une paroi de la porte avant 3, et plus particulièrement avec le rebord avant 33 de la paroi délimitant l'avant de l'ouverture de fenêtre 32 ;
- une protubérance 55 saillante de la face avant de l'embase 53 et présentant une rainure (non visible) destinée à coopérer avec le rebord d'un logement 20 ménagé dans l'aile avant 2 ; et
- une tige 56 saillante de la face arrière de l'embase 53 et destinée à servir de moyen de préhension pour permettre la manipulation par un opérateur de ce second organe d'ancrage, le ressort 50 étant monté à sa deuxième extrémité sur cette tige 56.

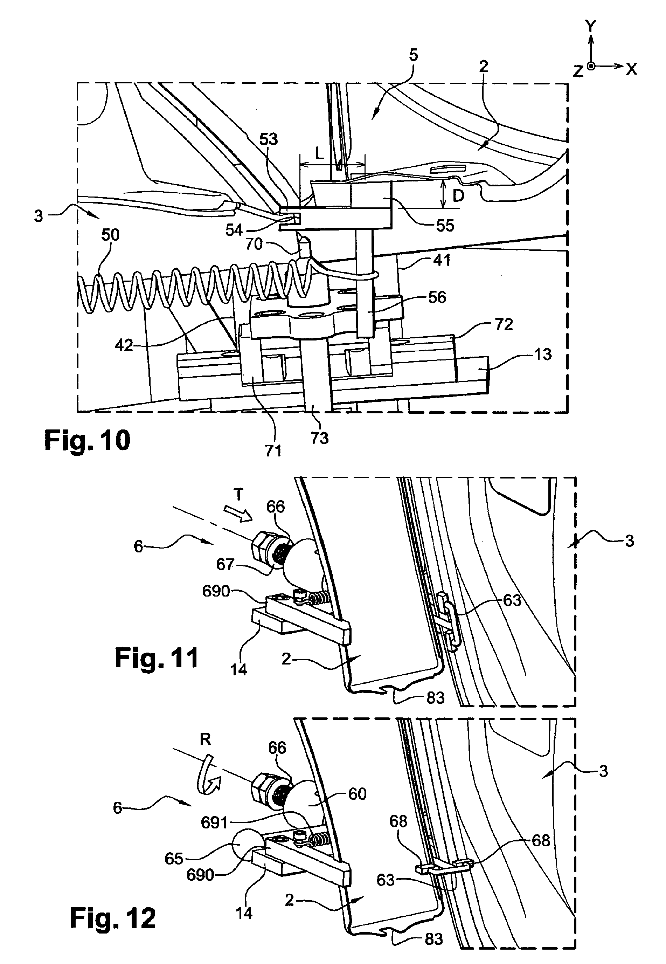

L'encoche 54 et la rainure de la protubérance 55 sont orientées dans le même sens et disposées en regard de la porte avant 3, une fois le dispositif 1 en situation. La distance L selon l'axe longitudinal X du véhicule, visible en figure 10, entre le fond de l'encoche 54 et le fond de la rainure de la protubérance 55 permet de régler la largeur de l'entrefer séparant les parties supérieures respectives de la porte avant 3 et de l'aile avant 2. La distance D selon l'axe transversal Y du véhicule, visible en figure 10, permet de régler la coplanarité entre les parties supérieures respectives de la porte avant 3 et de l'aile avant 2, autrement dit d'assurer surface continue sans décalage dans la direction transversale Y du véhicule.

Le dispositif 1 comprend un moyen inférieur de liaison 6 entre les parties inférieures respectives de l'aile avant 2 et la porte avant 3, ledit moyen inférieur de liaison 6 étant conçu pour régler la position de la partie inférieure de l'aile avant 2 par rapport à la partie inférieure de la porte avant 3, et plus particulièrement pour régler l'entrefer entre l'aile avant 2 et la porte avant 3 et pour assurer que ces deux éléments de carrosserie 2, 3 offrent en partie inférieure une surface continue jointive sans décalage dans la direction transversale Y du véhicule.

Le moyen inférieur de liaison 6 comporte :
- un support 60 pour une tige 61, ledit support 60 se présentant sous la forme d'un manchon de section cylindrique fixé sur l'extrémité inférieure du châssis 10 côté face arrière, autrement dit sur la face opposée à la plaque inférieure 15, ledit support/manchon 60 présentant un logement longitudinal traversant venant dans le prolongement des orifices ménagés dans l'extrémité inférieure de la poutre 11 et de la plaque inférieure 15, une encoche 62 en forme générale de « L » étant ménagée dans la paroi cylindrique du support/manchon 60 ;
- une tige 61 montée à coulissement et à rotation dans le support/manchon 60, ladite tige 61 présentant une première extrémité ou extrémité avant 63 en forme générale de « T » qui traverse les orifices ménagés dans l'extrémité inférieure de la poutre 11 et de la plaque inférieure 15 et qui débouche donc à travers ladite plaque inférieure 15, et ladite tige 61 présentant une seconde extrémité ou extrémité arrière 64 qui débouche hors du support/manchon 60 ;
- une poignée 65 solidaire de la tige 61 et en saillie selon une direction radiale, ladite poignée traversant l'encoche 62 ménagée dans le support/manchon 60 pour servir de moyen de préhension et de moyen de mise en mouvement de ladite tige 61 ; et
- un moyen de rappel 66 réalisé sous la forme d'un ressort hélicoïdal monté autour de la seconde extrémité 64 de la tige 61 entre le support/manchon 60 et un écrou formant butée 67 rattaché à la tige 61.

La première extrémité 63 de la tige 61 est munie de deux branches latérales coudées à 90° et dont les extrémités libres sont pourvues de cales 68.

L'encoche 62 présente une portion longitudinale et une portion circonférentielle sur environ un quart de tour.

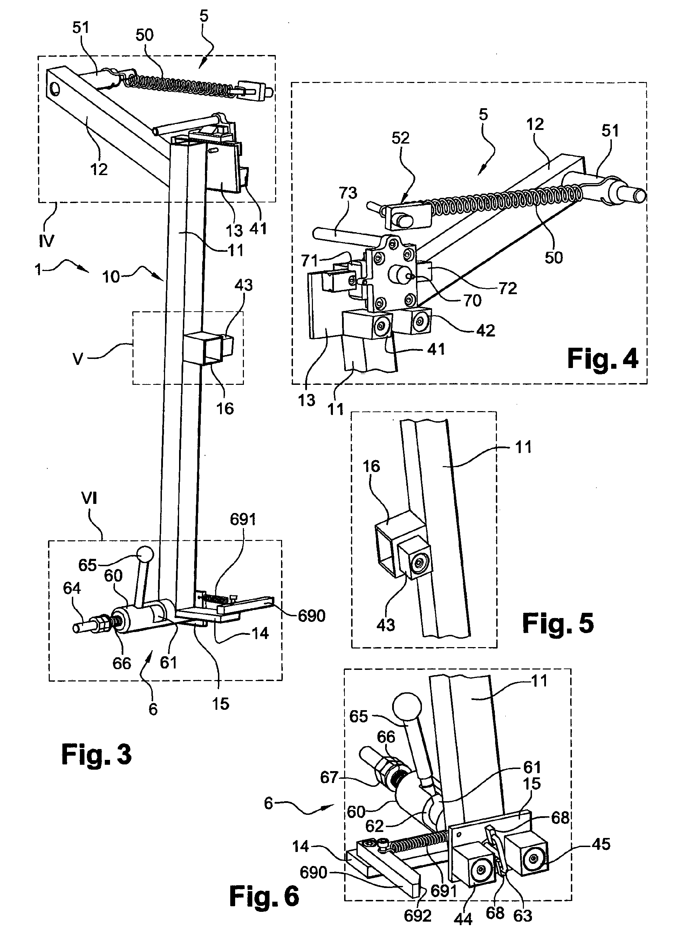

Comme visible en figure 6, la tige 61 peut occuper une première position dite de repos dans laquelle sa première extrémité 63 est disposée entre les deux aimants 44 et 45 et ne dépasse pas hors de ces aimants.

La poignée 65 est adaptée pour déplacer la tige 61 en translation dans le support/manchon 60, à partir de la position de repos, selon un premier sens illustré par la flèche T sur la figure 11, afin que sa première extrémité 63 traverse l'entrefer séparant la porte avant 3 et l'aile avant 2 en partie basse. La première extrémité 63 de la tige 61 est dimensionnée pour traverser cet entrefer quand le dispositif 1 est en place sur le véhicule au moyen des aimants. Une fois cette translation T effectuée, la tige 61 occupe la deuxième position illustrée en figure 11, et la poignée 65 est disposée en fond de la portion longitudinale de l'encoche 62.

La poignée 65 est en outre adaptée pour déplacer la tige 61 en rotation dans le support/manchon 60, à partir de la deuxième position, selon un angle de sensiblement 90°, comme illustré par la flèche R en figure 12, afin de disposer les deux cales 68 des branches latérales de la première extrémité 63 en regard de respectivement la porte avant 3 et l'aile avant 2. Pour réaliser cette rotation, la poignée 65 s'engage dans la partie circonférentielle de l'encoche 62 et la tige 61 occupe ainsi une troisième position visible en figure 12.

Le ressort 66 est quant à lui destiné à imposer un déplacement de la tige 61 en translation selon un deuxième sens opposé au premier sens de translation. De la sorte, une fois que la tige 61 occupe la troisième position, le ressort 66 conduit la tige 61 dans une quatrième position dite position finale où les deux branches latérales et les cales 68 en particulier sont en butée contre les deux éléments de carrosserie 2, 3 respectifs. De cette manière, le moyen inférieur de liaison 6 permet de régler le positionnement relatif des deux éléments de carrosserie 2, 3 et en particulier la coplanarité de l'aile avant 2 et de la porte avant 3 pour obtenir en partie inférieure une surface continue jointive sans décalage dans la direction transversale Y du véhicule.

Les dimensions des cales 68 sont préétablies pour affiner l'alignement de l'aile avant 2 et de la porte avant 3.

Le moyen inférieur de liaison 6 comporte en outre :
- un organe formant crochet 690 conçu pour verrouiller le châssis 10 sur l'aile avant 2, ledit organe formant crochet 690 étant monté pivotant sur l'extrémité libre du bras inférieur 14 du châssis 10 entre une position de déverrouillage et une position de verrouillage ; et
- un organe de rappel 691 réalisé sous la forme d'un ressort hélicoïdal fixé d'une part sur l'organe formant crochet 690 et d'autre part sur la plaque inférieure 15 du châssis 10, comme visible en figure 6, pour rappeler l'organe formant crochet 690 en position de verrouillage.

L'organe formant crochet 690 présente une extrémité libre biseautée 692 pour que, lors du montage du dispositif 1, ladite extrémité libre biseautée 692 vienne en appui contre l'aile avant 2 et qu'ainsi l'organe formant crochet 690 pivote à l'encontre du ressort 691 et se verrouille sur ladite aile avant 2 ainsi qu'illustré aux figures 11 et 12.

La première extrémité 63 de la tige 61 sert à faire le jeu entre l'aile avant 2 et la porte avant 3 en partie inférieure selon l'axe longitudinal X ; ce jeu étant garanti grâce au basculement naturel par gravité du dispositif de réglage 1 contre la porte avant 3, et l'organe formant crochet 690 assurant le plaquage de l'aile avant 2 contre cette première extrémité 63 de la tige 61.

Le dispositif 1 comprend également un pion 70 monté à coulissement sur le châssis 10 et destiné à être inséré dans l'entrefer séparant les deux éléments de carrosserie 2 et 3.

Le pion 70 est fixé sur un chariot 71 monté à coulissement sur la plaque inférieure 13 du châssis 10, et plus particulièrement sur un rail de guidage 72 fixé sur cette plaque inférieure 13, selon une direction sensiblement parallèle à l'axe longitudinal X du véhicule.

Le chariot 71 supporte une poignée 73 saillant en direction de la face arrière du dispositif 1 pour former un moyen de préhension adapté pour permettre à l'utilisateur de déplacer le chariot 71 et donc le pion 70 afin d'assurer l'insertion dudit pion 70 dans l'entrefer.

L'utilisation du dispositif 1 se fait comme suit :
- mise en place de l'aile avant 2 sur la caisse avec engagement des vis de fixation (non visibles) de l'aile avant 2 sur la caisse dans les logements correspondants, à savoir le logement supérieur 81 (visible aux figures 1, 2 et 7), le logement central 82 (visible aux figures 1 et 2) et le logement inférieur 83 (visible aux figures 11 et 12) ;
- plaquage du dispositif 1 sur les deux éléments de carrosserie 2, 3 avec les aimants 41 à 45 ;
- mise en place du premier organe d'ancrage 51 dans l'encoche 30 de la porte avant 3 suivi de l'ancrage du second organe d'ancrage 52 sur l'aile avant 2, en notant qu'une fois que le second organe d'ancrage 52 est mis en place, l'aile avant 2 vient vers le pion 70 par coulissement ;
- verrouillage de l'organe formant crochet 690 sur l'aile avant 2 suivie de la mise en place de la tige 61 en position finale par translation et rotation de la poignée 65 ;
- mise en place du pion 70 dans l'entrefer par action sur la poignée 73 ;
- vissage des vis de fixation de l'aile avant 2 sur la caisse dans les logements 81 à 83 ;
- mise en place de la tige 61 en position de repos par translation et rotation de la poignée 65 ;
- désengagement du second organe d'ancrage 52 ;
- retrait du dispositif 1 hors des deux éléments de carrosserie 2, 3.

Un tel dispositif 1 permet de garantir la qualité géométrique de l'accostage de l'aile avant 2 par rapport à la porte avant 3 sans offrir de contrainte car l'utilisation de ce dispositif 1 se fait avant le serrage des vis de fixation de l'aile avant 2 sur la caisse.

Ce dispositif 1 offre également l'avantage d'être utilisable sur plusieurs silhouettes ou modèles de véhicule sans nécessiter de gabarits encombrants à stocker en bord de ligne de montage, avec une maintenance très aisée et rapide dans le sens où il suffit essentiellement de nettoyer les aimants 41 à 45 de façon régulière.

## Revendications

1. Dispositif (1) de réglage de la position entre deux éléments de carrosserie d'un véhicule constitués respectivement d'une aile avant (2) et d'une porte avant (3), ledit dispositif comportant un châssis (10) et les moyens suivants :
- au moins un moyen supérieur de liaison (5) entre des parties supérieures respectives des deux éléments de carrosserie (2 ; 3), ledit moyen supérieur de liaison (5) étant monté sur une partie supérieure dudit châssis (10) et comportant ;
- un organe de mise en tension (50), du type ressort, ledit organe de mise en tension (50) présentant une première extrémité et une deuxième extrémité ;
- un premier organe d'ancrage (51) solidaire du châssis (10) et destiné à être ancré sur l'un des deux éléments de carrosserie, appelé premier élément de carrosserie (3), ledit organe de mise en tension (50) étant monté à sa première extrémité sur ledit premier organe d'ancrage (51) ; et
- un second organe d'ancrage (52) monté sur la deuxième extrémité de l'organe de mise en tension (50), ledit second organe d'ancrage (52) étant destiné à être ancré sur l'autre des deux éléments de carrosserie, appelé deuxième élément de carrosserie (2), une fois que ledit premier organe d'ancrage (51) est ancré sur le premier élément de carrosserie (3);
- au moins un moyen inférieur de liaison (6) entre des parties inférieures respectives des deux éléments de carrosserie (2 ; 3), ledit moyen inférieur de liaison étant monté sur une partie inférieure dudit châssis (10) ;
- au moins un pion (70) monté à coulissement sur ledit châssis (10) et destiné à être inséré dans l'entrefer séparant les deux éléments de carrosserie (2 ; 3) ; et
- des moyens de maintien (41, 42, 43, 44, 45) du châssis (10) sur les éléments de carrosserie (2 ; 3) respectifs, lesdits moyens de maintien, notamment réalisés sous la forme d'aimants, étant fixés sur ledit châssis (10)
**caractérisé en ce que** le premier organe d'ancrage (51) est réalisé sous la forme d'une pièce en saillie du châssis (10) destinée à être ancrée dans un logement (30) ménagé dans le premier élément de carrosserie (3).

2. Dispositif (1) selon la revendication 1, dans lequel le second organe d'ancrage (52) comprend :
- une embase (53) dans laquelle est ménagée une encoche (54) destinée à coopérer avec le premier élément de carrosserie (3) ; et
- une protubérance (55) saillante de ladite embase (53) et présentant une rainure destinée à coopérer avec le rebord d'un logement (20) ménagé dans le second élément de carrosserie (2).

3. Dispositif (1) selon l'une quelconque des revendications 1 ou 2, dans lequel le moyen inférieur de liaison (6) comporte :
- une tige (61) montée à coulissement et à rotation dans un support (60) de tige solidaire du châssis (10), ladite tige (61) présentant une première extrémité (63) en forme générale de « T » en étant munie de deux branches latérales ;
- un moyen de mise en mouvement (65) de ladite tige (61) adapté pour déplacer la tige (61) en translation selon un premier sens afin que sa première extrémité (63) traverse l'entrefer séparant les deux éléments de carrosserie (2 ; 3), et pour déplacer la tige (61) en rotation afin de disposer les deux branches latérales en regard des deux éléments de carrosserie (2 ; 3) respectifs ; et
- un moyen de rappel (66) destiné à imposer un déplacement de la tige (61) en translation selon un deuxième sens opposé au premier sens de sorte que les deux branches latérales viennent en butée contre les deux éléments de carrosserie (2 ; 3) respectifs pour régler le positionnement relatif des deux éléments de carrosserie (2 ; 3).

4. Dispositif (1) selon la revendication 3, dans lequel les moyens de maintien comportent au moins deux organes de maintien (44, 45) du châssis (10) sur les parties inférieures respectives des éléments de carrosserie (2 ; 3), lesdits organes de maintien (44, 45), notamment réalisés sous la forme d'aimants, étant fixés sur la partie inférieure dudit châssis (10) de part et d'autre de la première extrémité (63) de la tige (61).

5. Dispositif (1) selon l'une quelconque des revendications 3 ou 4, dans lequel le moyen inférieur de liaison (6) comporte en outre :
- un organe formant crochet (690) conçu pour verrouiller ledit châssis (10) sur l'un des éléments de carrosserie (2), ledit organe formant crochet (690) étant monté pivotant sur le châssis (10) entre une position de déverrouillage et une position de verrouillage ; et
- un organe de rappel (691) fixé d'une part sur l'organe formant crochet (690) et d'autre part sur le châssis (10) pour rappeler l'organe formant crochet (690) en position de verrouillage.

6. Dispositif (1) selon l'une quelconque des revendications 1 à 5, dans lequel le pion (70) est fixé sur un chariot (71) monté à coulissement sur le châssis (10), ledit chariot (71) supportant un moyen de préhension (73) adapté pour permettre le déplacement dudit chariot (71).

7. Dispositif (1) selon l'une quelconque des revendications 1 à 6, dans lequel les moyens de maintien comportent au moins deux organes de maintien (41, 42) du châssis (10) sur les parties supérieures respectives des éléments de carrosserie (2 ; 3), lesdits organes de maintien (41, 42) étant fixés sur la partie supérieure dudit châssis (10) et notamment réalisés sous la forme d'aimants.

8. Procédé de réglage de la position entre deux éléments de carrosserie d'un véhicule constitués respectivement d'une aile avant (2) et d'une porte avant (3), ledit procédé consistant à utiliser un dispositif (1) de réglage conforme à l'une quelconque des revendications 1 à 7.

## Patentansprüche

1. Vorrichtung (1) zum Einstellen der Position zwischen zwei Karosserieelementen eines Fahrzeugs, die jeweils aus einem vorderen Kotflügel (2) und einer vorderen Tür (3) gebildet werden, wobei die besagte Vorrichtung einen Rahmen (10) und die folgenden Vorrichtungen umfasst:
- zumindest eine obere Verbindungsvorrichtung (5) zwischen den jeweiligen oberen Abschnitten der beiden Karosserieelemente (2; 3), wobei die besagte obere Verbindungsvorrichtung (5) an einem oberen Abschnitt des besagten Rahmens (10) montiert wird und folgendes umfasst;
- ein Spannelement (50) in der Art einer Feder, wobei das besagte Spannelement (50) ein erstes Ende und ein zweites Ende aufweist;
- ein erstes Verankerungselement (51), welches fest mit dem Rahmen (10) verbunden und dazu bestimmt ist, an einem der beiden Karosserieelemente verankert zu werden, das erstes Karosserieelement (3) genannt wird, wobei das besagte Spannelement (50) mit seinem ersten Ende am besagten ersten Verankerungselement (51) montiert wird; und
- ein zweites Verankerungselement (52), welches am zweiten Ende des besagten Spannelements (50) montiert wird, wobei das besagte zweite Verankerungselement (52) dazu bestimmt ist, am anderen der beiden Karosserieelemente verankert zu werden, das zweites Karosserieelement (2) genannt wird, sobald das besagte erste Verankerungselement (51) am ersten Karosserieelement (3) verankert ist;
- zumindest eine untere Verbindungsvorrichtung (6) zwischen den jeweiligen unteren Abschnitten der beiden Karosserieelemente (2; 3), wobei die besagte untere Verbindungsvorrichtung an einem unteren Abschnitt des besagten Rahmens (10) montiert wird;
- zumindest einen Zapfen (70), der gleitend auf dem besagten Rahmen (10) montiert, und dazu bestimmt ist, in den Spalt eingeführt zu werden, der die beiden Karosserieelemente (2; 3) trennt; und
- Vorrichtungen zum Festhalten (41, 42, 43, 44, 45) des Rahmens (10) auf den jeweiligen Karosserieelementen (2; 3), wobei die besagten Festhaltevorrichtungen, die vor allem in Form von Magneten ausgeführt sind, auf dem besagten Rahmen (10) befestigt sind,
**dadurch gekennzeichnet, dass** das erste Verankerungselement (51) in Form eines Teiles ausgeführt ist, das über den Rahmen (10) hinaus übersteht, und dazu bestimmt ist, in einer Aufnahme (30) verankert zu werden, die in das erste Karosserieelement (3) eingearbeitet ist.

2. Vorrichtung (1) nach Anspruch 1, bei der das zweite Verankerungselement (52) folgendes umfasst:
- ein Unterteil (53), in das eine Einkerbung (54) eingearbeitet ist, die dazu bestimmt ist, mit dem ersten Karosserieelement (3) zusammenzuwirken; und
- eine Protuberanz (55), die aus dem besagten Unterteil (53) hervorsteht, und eine Nut aufweist, die dazu bestimmt ist, mit der Kante einer Aufnahme (20) zusammenzuwirken, die in das zweite Karosserieelement (2) eingearbeitet ist.

3. Vorrichtung (1) nach irgendeinem der Ansprüche 1 oder 2, bei der die untere Verbindungsvorrichtung (6) folgendes umfasst:
- einen Stift (61), der gleitend und drehend in einem Halter (60) des Stiftes montiert ist, der fest mit dem Rahmen (10) verbunden ist, wobei der besagte Stift (61) ein erstes Ende (63) in einer allgemeinen "T"-Form aufweist, und mit zwei seitlichen Ästen versehen ist;
- eine Vorrichtung zum Antreiben (65) des besagten Stifts (61), die sich dazu eignet, um den Stift (61) in eine erste Richtung zu verschieben, damit dessen erstes Ende (63) durch den Spalt führt, der die beiden Karosserieelemente (2; 3) trennt, und um den Stift (61) in Drehung zu versetzen, um die beiden seitlichen Äste gegenüber den jeweiligen beiden Karosserieelementen (2; 3) anzuordnen; und
- eine Rückholvorrichtung (66), die dazu bestimmt ist, eine Verschiebebewegung des Stifts (61) in eine zweite Richtung zu erzwingen, die in die entgegengesetzte Richtung zur ersten verläuft, sodass sich die beiden seitlichen Äste an den jeweiligen beiden Karosserieelementen (2; 3) anlegen, um die Positionierung der beiden Karosserieelemente (2; 3) zueinander einzustellen.

4. Vorrichtung (1) nach Anspruch 3, bei der die Festhaltevorrichtungen zumindest zwei Elemente zum Festhalten (44, 45) des Rahmens (10) auf den jeweiligen unteren Abschnitten der Karosserieelemente (2; 3) umfassen, wobei die besagten Festhalteelemente (44, 45), die vor allem in Form von Magneten ausgeführt sind, auf dem unteren Abschnitt des besagten Rahmens (10) beiderseits des ersten Endes (63) des Stifts (61) befestigt sind.

5. Vorrichtung (1) nach irgendeinem der Ansprüche 3 oder 4, bei der die untere Verbindungsvorrichtung (6) darüber hinaus folgendes umfasst:
- ein Element, einen Haken (690) bildend, das gestaltet wurde, um den besagten Rahmen (10) auf einem der Karosserieelemente (2) zu verriegeln, wobei das besagte, den Haken (690) bildende Element zwischen einer entriegelten und einer verriegelten Stellung schwenkbar auf dem Rahmen (10) montiert ist; und
- ein Rückholelement (691), das einerseits auf dem den Haken (690) bildenden Element befestigt ist, und andererseits auf dem Rahmen (10), um das den Haken (690) bildende Element in die Verriegelungsstellung zurückzuziehen.

6. Vorrichtung (1) nach irgendeinem der Ansprüche 1 bis 5, bei der der Zapfen (70) auf einem Schlitten (71) befestigt ist, der gleitend auf dem Rahmen (10) montiert ist, wobei der besagte Schlitten (71) ein Greifelement (73) trägt, das sich dazu eignet, um das Verfahren des besagten Schlittens (71) zu ermöglichen.

7. Vorrichtung (1) nach irgendeinem der Ansprüche 1 bis 6, bei der die Festhaltevorrichtungen zumindest zwei Elemente zum Festhalten (41, 42) des Rahmens (10) auf den jeweiligen oberen Abschnitten der Karosserieelemente (2; 3) umfassen, wobei die besagten Festhalteelemente (41, 42) auf dem oberen Abschnitt des besagten Rahmens (10) befestigt, und vor allem in Form von Magneten ausgeführt sind.

8. Verfahren zum Einstellen der Position zwischen zwei Karosserieelementen eines Fahrzeugs, die jeweils aus einem vorderen Kotflügel (2) und einer vorderen Tür (3) gebildet werden, wobei das besagte Verfahren darin besteht, eine Vorrichtung (1) zum Einstellen nach irgendeinem der Ansprüche 1 bis 7 zu verwenden.

## Claims

1. Device (1) for adjusting the position between two bodywork elements of a vehicle comprised respectively of a front wing (2) and a front door (3), said device including a framework (10) and the following means:
- at least one upper linking means (5) linking respective upper parts of the two bodywork elements (2; 3), said upper linking means (5) being mounted on an upper part of said framework (10) and comprising:
- a tensioning member (50), such as a spring, said tensioning member (50) having a first end and a second end;
- a first anchoring member (51) secured to the framework (10) and designed to be anchored on one of the two bodywork elements, known as the first bodywork element (3), said tensioning member (50) being mounted at its first end onto said first anchoring member (51); and
- a second anchoring member (52) mounted onto the second end of the tensioning member (50), said second anchoring member (52) being designed to be anchored onto the other of the two bodywork elements, known as the second bodywork element (2), once said first anchoring member (51) is anchored onto the first bodywork element (3);
- at least one lower linking means (6) linking respective lower parts of the two bodywork elements (2; 3), said lower linking means being mounted on a lower part of said framework (10);
- at least one peg (70) mounted so that it can slide along said framework (10) and intended to be inserted in the gap between the two bodywork elements (2; 3); and
- holding means (41, 42, 43, 44, 45) for holding the framework (10) on the respective bodywork elements (2; 3), said holding means, in particular produced in the form of magnets, being attached to said framework (10),
**characterised in that** the first anchoring member (51) is produced in the form of a part protruding from the framework (10), designed to be anchored in a housing (30) fitted into the first bodywork element (3).

2. Device (1) according to claim 1, wherein the second anchoring member (52) comprises:
- a base plate (53) in which is fitted a notch (54) designed to engage with the first bodywork element (3); and
- a protrusion (55) protruding from said base plate (53) and having a groove designed to engage with the rim of a housing (20) fitted in the second bodywork element (2).

3. Device (1) according to any one of claims 1 or 2, wherein the lower linking means (6) comprises:
- a rod (61) mounted so that it can slide and rotate in a rod bracket (60) secured to the framework (10), said rod (61) having a first end (63) with a general "T" shape and being equipped with two side branches;
- a means (65) for moving said rod (61), capable of moving the rod (61) in translation in a first direction so that its first end (63) passes through the gap between the two bodywork elements (2; 3), and capable of moving the rod (61) in rotation in order to position the two side branches opposite the two respective bodywork elements (2; 3); and
- a return means (66) designed to force the rod (61) to move in translation in a second direction opposite to the first direction so that the two side branches abut against the two respective bodywork elements (2; 3) to adjust the relative position of the two bodywork elements (2; 3).

4. Device (1) according to claim 3, wherein the holding means comprise at least two holding members (44, 45) holding the framework (10) on the respective lower parts of the bodywork elements (2; 3), said holding members (44, 45), in particular produced in the form of magnets, being attached to the lower part of said framework (10) on both sides of the first end (63) of the rod (61).

5. Device (1) according to any one of claims 3 or 4, wherein the lower linking means (6) further comprises:
- a hook-forming member (690) designed to lock said framework (10) onto one of the bodywork elements (2), said hook-forming member (690) being mounted so that it can pivot on the framework (10) between an unlocking position and a locking position; and
- a return member (691) attached on the one hand onto the hook-forming member (690) and on the other hand onto the framework (10) to return the hook-forming member (690) to the locking position.

6. Device (1) according to any one of claims 1 to 5, wherein the peg (70) is attached to a trolley (71) mounted so that it can slide along the framework (10), said trolley (71) supporting a gripping means (73) capable of enabling said trolley (71) to move.

7. Device (1) according to any one of claims 1 to 6, wherein the holding means comprise at least two holding members (41, 42) holding the framework (10) on the respective upper parts of the bodywork elements (2; 3), said holding members (41, 42) being attached to the upper part of said framework (10) and in particular being produced in the form of magnets.

8. Method for adjusting the position between two bodywork elements of a vehicle comprised respectively of a front wing (2) and a front door (3), said method consisting in using an adjustment device (1) according to any one of claims 1 to 7.
